Europäisches Patentamt

(19) **European Patent Office**

Office européen des brevets

(11) Publication number: **0 203 549**
**B1**

# EUROPEAN PATENT SPECIFICATION

(45) Date of publication of the patent specification:
29.08.90

(51) Int. Cl.⁵: **C02F 3/30, C02F 1/52**

(21) Application number: 86107029.0

(22) Date of filing: 23.05.86

(54) Waste water treatment process.

(30) Priority: 23.05.85 JP 111205/85

(43) Date of publication of application:
03.12.86 Bulletin 86/49

(45) Publication of the grant of the patent:
29.08.90 Bulletin 90/35

(84) Designated Contracting States:
CH DE FR GB LI NL SE

(56) References cited:
DE-A- 3 001 929
DE-A- 3 501 585
FR-A- 471 879

G.M.F. WASSER ABWASSER, vol. 124, no. 5, May 1983, pages 239-242, München, DE; M. HIROSE: "Ein neues System einer Kombination des Belebungsverfahrens mit sessilen Organismen auf Aufwuchsflächen"
F. MEINCK et al.: "Industrie-Abwässer", 4th edition, 1968, pages 97,257,399,542,585,604, Gustav Fischer Verlag, Stuttgart, DE
JOURNAL OF THE WATER POLLUTION CONTROL FEDERATION, vol. 53, no. 12, December 1981, pages 1691-1699, Washington, US; E.F. BARTH et al.: "International nutrient control technology for municipal effluents"

(73) Proprietor: Nishihara Environmental Sanitation Research Corp. Ltd., 6-18, Shibaura 3-chome, Minato-ku Tokyo(JP)

(72) Inventor: Nishiguchi, Takeshi Villa Higashiyama 3-B, 592-1, Nushiyamachi Nanajyo Agaru, Daikokumachidori Higashiyama-ku Kyoto(JP)

(74) Representative: Glawe, Delfs, Moll & Partner Patentanwälte, Postfach 26 01 62 Liebherrstrasse 20, D-8000 München 26(DE)

**Description**

The present invention relates to a waste water treatment process according to the preamble part of claim 1.

As one of countermeasures to pollution of lakes and ponds, the demand for removal of phosphorus and nitrogen in waste water is recently growing.

Denitrification is usually carried out by biological process, and the technique for denitrification has been considerably established. For the removal of phosphorus, the coagulation process, biological process, crystallization process, etc. have been proposed. But, all of them have merits and demerits. A satisfactory treatment process has not been developed.

In more detail, the coagulation process permits a stable treatment for the removal of phosphorus, but requires a large amount of a coagulating agent. This increases the running cost. Another disadvantage is that a large amount of sludge has to be disposed.

The biological process is economical, but, if the treatment conditions such as the flow rate of waste water change, phosphorus is not effectively removed. Another problem is that if the sludge produced is stored in an anaerobic state, the phosphorus which has been taken into the sludge is re-released. This makes it necessary to provide some means for preventing such a re-release. A further problem is that if the waste water is treated not only for phosphorus removal but also for denitrification, the conditions suitable for denitrification affect the phosphorus removal rate unfavorably, thus making the treatment unstable.

Also, the crystallization process requires a lot of conditions for effective disposal and much labor for pretreatment.

DE-A 3 001 929 discloses a waste water treatment process according to the preamble part of claim 1. In this treatment process iron pieces or fragments containing or composed by iron oxide are used as a precipitating medium to remove phosphorus from the waste water by adding it before or after a biological treatment. Accordingly a separate tank has to be provided and it is necessary to add a suitable amount of iron pieces continuously to remove phosphorus from the waste water which is continuously supplied. Therefore, a continuous maintainance is necessary so that the maintainance costs are increased. Furthermore, if the particle size of the iron pieces is too large, they will settle and accumulate on the bottom of the tank, thus reducing the processing capacity gradually and requiring cleaning labour for removing such iron pieces. In addition, it is difficult to adjust the amount of iron pieces according to the change in the concentration of phosphorus in the waste water as well as with respect to the amount of iron contained in the pieces.

From "Journal of Water Pollution Control Federation", Vol. 53 (1981), Dec., No. 12, pages 1691–1701, a waste water treatment process is known in which the waste water is treated in several tanks and in which phosphorus removing is performed by a chemical process by adding alum, ferrous or ferric compounds either in a primary or secondary treatment process. Also in this process costs for maintainance and controlling the process are high.

It is therefore an object of the present invention to provide a waste water treatment process which permits an effective biochemical phosphorus removal, has both the advantage of the coagulation process and that of the biological process and allows a stable dinitrification, too.

This object is achieved by a waste water treatment process having the features given in claim 1. The dependent claims are related to further developments of the invention.

In the process according to the present invention, the waste water flows into a tank containing activated sludge. In the second step or non-aeration step, the mixed liquor including the waste water and the activated sludge is put in an anaerobic state, so that firstly denitrification will take place and then the phosphorus in the bacteria in the activated sludge will be released in the form of phosphate ions. In the aerating step, air is blown into the mixed liquor in the tank to put it in an aerobic state so that the oxidation of nitrogen component in the waste water and the over-intake of phosphate ions by the bacteria in the activated sludge take place. Bacteria will adhere to the iron contact material in the tank and accelerate the elution of iron ions from the iron contact material. In more detail, the bacteria adhering to the iron contact material cause the formation of acids, the formation of concentration cells of oxygen, carbon, etc. and accelerate the depolarization of cathode, so that the iron contact material will be partially melted and the iron ions be eluted from the iron contact material. The eluted iron ions will react with the phosphate ions to form iron phosphates which are insoluble. Thus, the phosphate ions in the waste water are insolubilized and taken into the sludge.

The mixed liquor is settled and separated into the sludge and the supernatant liquid. Now the supernatant liquid is free from phosphorus. For effective removal of phosphorus, the load of phosphorus per unit surface area of the iron contact material should be not more than 1.0 gram/m$^2$ per day.

In accordance with the present invention, because phosphorus in the waste water is insolubilized in the form of iron phosphates, a stable phosphorus removal is possible. Also, the phosphate ions will be hardly re-released, in contrast to the conventional biological process in which when the sludge is put in an anaerobic condition, the re-release of phosphate ions will start soon.

Because the iron contact material is covered with a biological film and the release of phosphate ions occurs near the surface of the iron contact material, the efficiency of removal of phophate ions by iron ions is very good.

Generally, in the coagulation process in which phosphates are removed by iron salts, iron salts have to be added in an amount of 3 to 5 times the theoretical value. In the process according to the present invention, the amount of iron ions required is substantially equal to the theoretical value and the amount of excess sludge that has to be disposed is much less. The iron ions which have just been released are more active than those added as a coagulating agent and react more effectively.

At a small sewage treatment plant, it is difficult to expect a stable phosphorus removal rate with the biological process in which the removal rate changes with the operating conditions. With the process according to the present invention, a secure, stable removal of phosphorus can be expected even at such a small plant.

The excess sludge produced in the process according to the present invention is highly effective as a fertilizer because of rich content of phosphates and iron ions, and because the iron ions remove hydrogen sulfide, which is bad for plants, in the form of iron sulfide.

In the process according to the present invention, because aerobic and anaerobic conditions are repeated, biological denitrification is securely carried out as well as phosphorus removal. Since phosphorus is removed by reacting iron ions with phosphate ions, phosphorus removal is possible even in an insufficient anaerobic condition in the second or non-aeration step. Therefore, a stable denitrification is possible with a sufficient nitrification.

With the process according to the present invention, the sludge volume index ($SV_{30}$) is about half of that with the conventional treatment process. This means that the rate at which the sludge settles is much higher than with the conventional process.

Other objects and advantages of the present invention will become apparent from the following description taken with reference to the accompanying drawings.

Fig. 1 is a schematic sectional view of an apparatus for embodying the process according to the present invention;

Fig. 2 is a time chart showing the steps of the process employing the apparatus of Fig. 1;

Fig. 3 is a schematic sectional view of another example of an apparatus for embodying the process according to the present invention;

Fig. 4 is a time chart showing the steps of the process employing the apparatus of Fig. 3, and

Fig. 5 is a graph showing the relationship between the phosphorus removal rate and the phosphorus load to the iron contact material.

The process embodying the present invention will be described with reference to the accompanying drawings. Firstly, a waste water treatment apparatus for embodying the process according to the present invention will be described. Although in the preferred embodiment the agitating step is adopted as the second step, a settling step may be adopted instead of it.

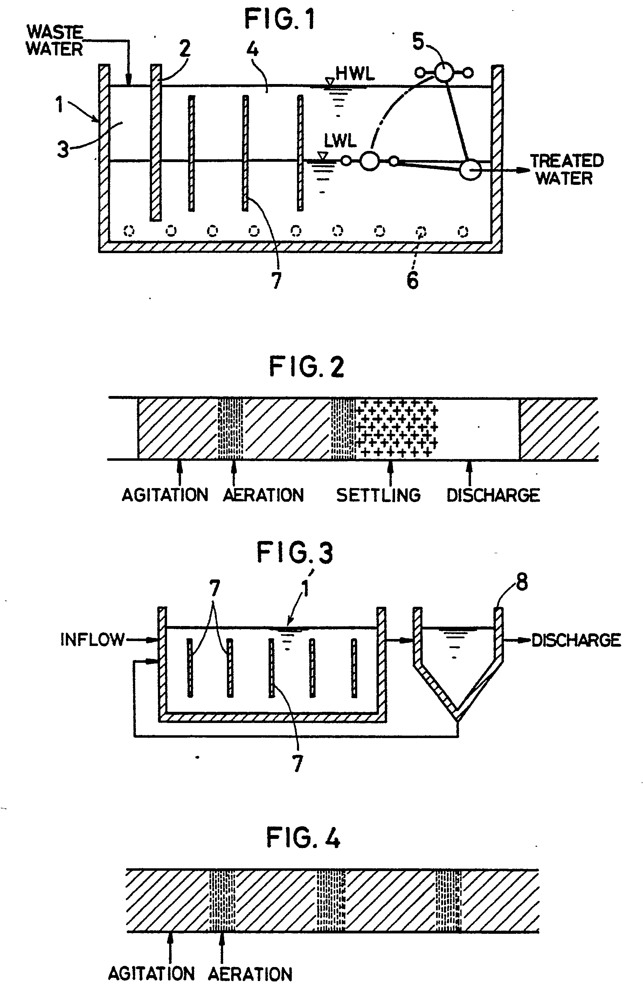

Referring to Fig. 1, activated sludge is contained in a treatment tank 1. A baffle plate 2 is provided in the tank at a position near its one end to partition the tank 1 into two zones; an inflow zone 3 into which waste water flows and a waste water treatment zone 4. A supernatant discharger 5 is provided in the tank 1 near its other end so as to be vertically movable. In the discharge step, the discharger 5 goes down while discharging the supernatant liquid. Air diffusers 6 are provided at bottom of the tank 1 to diffuse air into the mixed liquor. A jet aerator ejecting an air-liquid mixture is particularly suitable as a diffuser because it seldom gets clogged and can also be used as an agitator which agitates by ejecting liquid only. Contact material 7 made of iron is provided in the tank 1 at least in the treatment zone 4. In the preferred embodiment, a plurality of contact plates 7 made of iron are arranged at uniform spacings.

In the waste water treatment apparatus of a structure described above, the tank 1 is controlled to repeat the agitating, aerating, settling and discharging steps one after another, as shown in Fig. 2. In this case it is necessary to repeat a cycle of agitating and aerating at least twice. The process will be described in more detail.

Firstly, waste water flows into the inflow zone 3 of the tank 1. The inflow of waste water may be continuous, be stopped in the settling and discharging steps, or done only in the agitating step. Organic matter, nitrogen and phosphorus are removed from the waste water by the activated sludge in the tank.

Describing particularly about phosphorus, the phosphorus in the bacteria in the activated sludge is released in the form of phosphate ions in the agitating step because the activated sludge is in an anaerobic condition. Since air is ejected into the mixed liquor by the air diffuser 6 in the aerating step, it turns to an aerobic state, so that part of the phosphate ions in the waste water will be taken in by the bacteria in the sludge.

On the other hand, the bacteria adhering to the iron contact plates 7 accelerate the melting of the contact plates owing to the formation of acids by bacteria, the formation of a concentration cell of oxygen, carbon, etc. and the depolarization of cathode. As a result, the iron ions elute into the water, reacting with the phosphate ions in the waste water to form iron phosphate which is water insoluble. The iron phosphate is taken in the sludge in the tank. In the settling step, the sludge which has taken iron phosphate precipitates in the tank. In the next discharging step, the phosphorus-removed supernatant is discharged by the supernatant discharger 5. The phosphorus is discharged out of the system by removing the excess sludge.

The following results were obtained in the experiment in which waste water was treated by use of the apparatus according to the present invention. The experiment included 45 minutes to one hour for the aerating step and one hour for the non-aeration step.

| | Total Phosphorus | | Total Nitrogen | |
|---|---|---|---|---|
| | Inflow | Discharge | Inflow | Discharge |
| (1) | 3.98 | 0.33 | 44.5 | 1.4 |
| (2) | 3.98 | 0.20 | 44.5 | 3.8 |
| (3) | 8.08 | 0.95 | 106.0 | 6.8 |
| (4) | 8.41 | 1.11 | 120.0 | 11.8 |

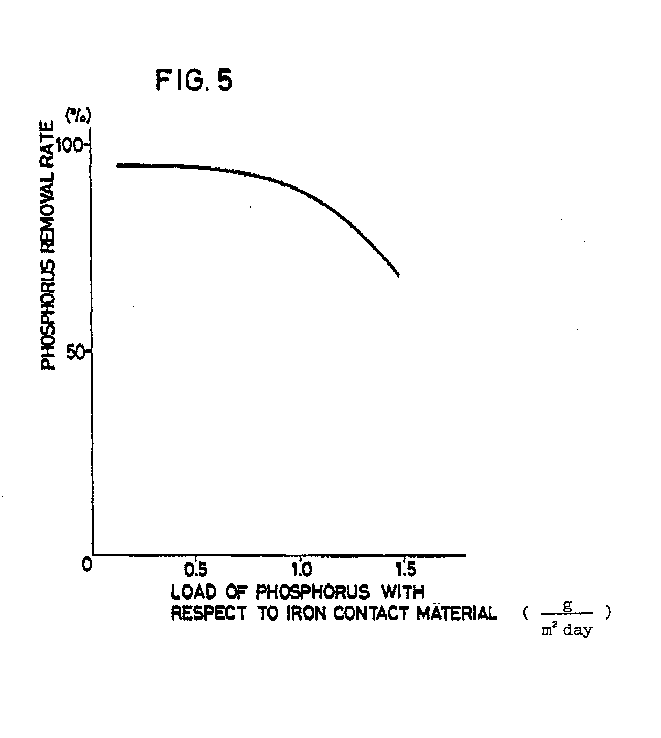

Other experiments were carried out in which the number and thus the surface area of iron contact plates arranged in the tank were changed. The relationshop between the phosphorus removal rate and the phosphorus load with respect to the iron contact plates is shown in Fig. 5. This graph shows that the phosphorus load with respect to the iron contact plates should be not more than 1.0 gram/m² per day. If it is less than 1.0 gram/m² per day, over 90 % phosphorus removal can be expected. If it were less than 0.1 gram/m² per day, too much amount of iron ions elute, forming iron oxides, which make the treated water brown. Thus, the phosphorus load should be practically 0.1 to 1.0 gram/m² per day.

The apparatus shown above is batch-wise. But, the present invention is not limited thereto. The present invention can also be embodied with a continuous type apparatus having a sedimentation tank 8 as shown in Fig. 3. In the second embodiment, waste water is fed continuously or intermittently into the treatment tank 1' in which a plurality of iron contact plates 7 are arranged. The waste water is treated by activated sludge in the tank. The mixed liquor flows into the sedimentation tank 8. The supernatant in the tank 8 is discharged and the sludge that has precipitated in the tank 8 is returned to the treatment tank 1. Aerating and agitating are repeated in the treatment tank 1', as shown in Fig. 4. Similar effects to those in the first embodiment are obtained. It is also necessary to repeat a cycle of agitating and aerating at least twice for the residence time for the treatment tank 1'.

In these embodiments, the iron contact material 7 may be in the form of corrugated plates, porous members, or members having a plurality of long strips projecting from their body to increase the surface area, or in the form of a mass. Preferably, the iron contact material 7 should be of a plug-in type for easy replacement. Also, the baffle plate 2 may be of an iron contact material.

In the present invention, phosphorus is removed eventually by reaction of the iron ions with phosphate ions. Thus, the removal of phosphorus is possible even under the condition where biological phosphorus removal does not occur, i.e. under the condition where nitric acid remains in the waste water.

In the present invention, it is unnecessary to inoculate any particular bacteria because the bacteria causing iron ions to be eluted are usually present in the natural world. But, because clay contains such bacteria, clay may be added into the tank at the initial stage of operation.

In these embodiments, a part of excess sludge in which phosphorus has been taken is discharged intermittently or continuously from the sedimentation tank, and stored in a sludge thickener or a sludge storage tank. Thus, the sludge is put under an anaerobic condition, and re-release of phosphate ions will occur. In order to avoid this, the iron contact material should be arranged in the sludge thickener or sludge storage tank, too, to insolubilize the phosphate ions that have been released. Since the release of phosphate ions from the sludge ends in about two days, phosphorus can be substantially completely insolubilized by arranging the iron contact material in the sludge thickener or sludge storage tank if sludge is allowed to stay therein for two days or longer.

Identification of the iron phosphates in the sludge showed that part of it was crystalline and the remainder was amorphous.

## Claims

1. A waste water treatment process for removing nitrogen and phosphorous from wasste water by use of activated sludge under utilization of iron-containing material for removing phosphorus, comprising the steps of feeding waste water into a treatment tank containing the activated sludge to form a mixed liquor including the waste water and the sludge, characterized by the steps of putting the mixed liquor in the treatment tank in an anaerobic condition to cause the denitrification and to release the phosphorus in the activated sludge in form of phosphate ions, aerating the mixed liquor to put it in an aerobic condition to cause the nitrification and to ingest said phosphate ions, settling the mixed liquor to separate it into a supernatant liquid and the sludge, and discharging the supernatant liquid, said iron-containing material being arranged in the treatment tank in form of iron plates having a definite surface area determined so that the ratio of the phosphorus load per day in the waste water to the total surface area of said iron plates is in the range of 0,1 to 1,0 g/m$^2$.

2. The waste water treatment process as claimed in claim 1, wherein the settling step is performed in said treatment tank.

3. The waste water treatment process as claimed in claim 1, wherein the setting step is performed in a separate tank from which the supernatant liquid is discharged.

4. The waste water treatment process as claimed in claim 1, wherein the non-aeration step is done by agitating the mixed liquor.

5. The waste water treatment process as claimed in claim 1, wherein the non-aeration step is done by letting the mixed liquor stand.

## Patentansprüche

1. Verfahren zur Abwasserbehandlung zum Entfernen von Stickstoff und Phosphor aus Abwasser mittels Belebtschlamm unter Verwendung von eisenhaltigem Material zur Phosphorentfernung, wobei Abwasser in einen den belebten Schlamm enthaltenden Behandlungsbehälter geleitet wird, um eine Mischflüssigkeit aus dem Abwasser und dem Schlamm zu bilden, gekennzeichnet durch die folgenden Schritte: Versetzen der Mischflüssigkeit in dem Behandlungsbehälter in einem anaeroben Zustand, um die Denitrifizierung zu bewirken und den Phosphor in dem belebten Schlamm in Form von Phosphationen freizusetzen, Belüften der Mischflüssigkeit, um sie in einen aeroben Zustand zu versetzen, um die Nitrifizierung zu veranlassen und die Phosphationen aufzunehmen, Sedimentieren der Mischflüssigkeit, um sie in eine überstehende Flüssigkeit und den Schlamm zu trennen, und Abführen der überstehenden Flüssigkeit, wobei das eisenhaltige Material in dem Behandlungsbehälter in Form von Eisenplatten angeordnet wird, die eine definierte Oberflächengröße aufweisen, die so festgelegt ist, daß das Verhältnis der Phosphorfracht pro Tag im Abwasser zu der gesamten Oberflächengröße der Eisenplatten in dem Bereich von 0,1 bis 1,0 g/m$^2$ liegt.

2. Verfahren für eine Abwasserbehandlung nach Anspruch 1, in dem der Schritt des Sedimentierens in dem Behandlungsbehälter ausgeführt wird.

3. Verfahren für eine Abwasserbehandlung nach Anspruch 1, in dem der Schritt des Sedimentierens in einem getrennten Behälter ausgeführt wird, aus dem die überstehende Flüssigkeit abgeleitet wird.

4. Verfahren für eine Abwasserbehandlung nach Anspruch 1, in dem der Schritt der Nichtbelüftung unter Rühren der Mischflüssigkeit ausgeführt wird.

5. Verfahren für eine Abwasserbehandlung nach Anspruch 1, in dem der Schritt der Nichtbelüftung unter Stehenlassen der Mischflüssigkeit ausgeführt wird.

## Revendications

1. Procédé de traitement d'eaux usées pour l'élimination de l'azote et du phosphore des eaux usées, au moyen de boues activées, avec utilisation d'une matière contenant du fer pour éliminer le phosphore, comprenant les opérations d'introduction des eaux usées dans une cuve de traitement contenant les boues activées, pour former une liqueur mélangée comprenant les eaux usées et les boues, caractérisé par les opérations de:
amenée de la liqueur mélangée dans la cuve de traitement à un état anaérobie, afin de provoquer la dénitrification et de libérer le phosphore dans les boues activées sous la forme d'ions phosphate,
aération de la liqueur mélangée, pour l'amener à un état aérobie, afin de provoquer la nitrification et d'intégrer lesdits ions phosphate,
décantation de la liqueur mélangée, afin de la séparer en un liquide surnageant et en boues, et évacuation du liquide surnageant,
ladite matière contenant du fer étant disposée dans la cuve de traitement sous la forme de plaques de fer ayant une surface définie déterminée de sorte que le rapport de la charge de phosphore par jour dans les eaux usées à la surface totale desdites plaques de fer est compris entre 0,1 et 1,0 g/m$^2$.

2. Procédé de traitement d'eaux usées suivant la revendication 1, dans lequel l'opération de décantation est effectuée dans ladite cuve de traitement.

3. Procédé de traitement d'eaux usées suivant la revendication 1, dans lequel l'opération de décantation est effectuée dans une cuve séparée à partir de laquelle le liquide surnageant est évacué.

4. Procédé de traitement d'eaux usées suivant la revendication 1, dans lequel l'opération de non-aération est effectuée par agitation de la liqueur mélangée.

5. Procédé de traitement d'eaux usées suivant la revendication 1, dans lequel l'opération de non-aération est effectuée par mise au repos de la liqueur mélangée.

# FIG. 1

WASTE WATER

HWL

LWL

TREATED WATER

1
2
3
4
5
6
7

# FIG. 2

AGITATION    AERATION    SETTLING    DISCHARGE

# FIG. 3

INFLOW

DISCHARGE

7
1
8
7

# FIG. 4

AGITATION    AERATION

EP 0 203 549 B1

## FIG. 5

Figure showing PHOSPHORUS REMOVAL RATE (%) versus LOAD OF PHOSPHORUS WITH RESPECT TO IRON CONTACT MATERIAL ($\frac{g}{m^2 \, day}$)